# EUROPÄISCHE PATENTSCHRIFT

(11) **EP 3 717 938 B1**
(45) Veröffentlichungstag und Bekanntmachung des Hinweises auf die Patenterteilung: **26.07.2023**
(21) Anmeldenummer: 18811482.1
(22) Anmeldetag: 26.11.2018
(51) Int. Cl.: G01S 17/10, G01S 7/497, G01S 7/4865, G01S 7/484, G01S 17/931

(54) **OPTOELEKTRONISCHE DETEKTIONSEINRICHTUNG, VERFAHREN ZUM BETRIEB EINER SOLCHEN DETEKTIONSEINRICHTUNG UND KRAFTFAHRZEUG MIT EINER SOLCHEN DETEKTIONSEINRICHTUNG**
OPTOELECTRONIC DETECTION DEVICE, METHOD FOR OPERATING SUCH A DETECTION DEVICE, AND MOTOR VEHICLE HAVING SUCH A DETECTION DEVICE
DISPOSITIF DE DÉTECTION OPTOÉLECTRONIQUE , PROCÉDÉ PERMETTANT DE FAIRE FONCTIONNER LEDIT DISPOSITIF DE DÉTECTION ET VÉHICULE AUTOMOBILE MUNI DUDIT DISPOSITIF DE DÉTECTION

(30) Priorität: 27.11.2017 DE 102017127922
(43) Veröffentlichungstag der Anmeldung: 07.10.2020
(73) Patentinhaber: Valeo Schalter und Sensoren GmbH, 74321 Bietigheim-Bissingen (DE)
(72) Erfinder: SCHENK, Jochen, 74321 Bietigheim-Bissingen (DE); KLEISER,Michael, 74321 Bietigheim-Bissingen (DE); SELBMANN, Frank, 74321 Bietigheim-Bissingen (DE); NIES, Jürgen, 74321 Bietigheim-Bissingen (DE)
(74) Vertreter: Pothmann, Karsten
(86) Internationale Anmeldenummer: PCT/EP2018/082518
(87) Internationale Veröffentlichungsnummer: WO 2019/101990

(56) Entgegenhaltungen:
- EP-A1- 1 876 469
- EP-A1- 2 955 539
- WO-A1-2016/121531
- DE-B3-102015 121 578

## Beschreibung

Die vorliegende Erfindung betrifft eine optoelektronische Detektionseinrichtung mit mindestens einer optischen Sendeeinheit mit einem elektromagnetischen Pulserzeuger zum Aussenden elektromagnetischer Sendepulse, und mindestens einem optischen Empfänger zum Empfangen von reflektierten Sendepulsen, welcher einer Auswertungseinrichtung ein in Abhängigkeit der reflektierten Sendepulse gebildetes Empfangssignal bereitstellt, wobei der optische Empfänger eingerichtet ist, ein Triggersignal zur Steuerung des optischen Senders bereitzustellen. Auch betrifft die vorliegende Erfindung ein Verfahren zum Betrieb einer solchen optoelektronischen Detektionseinrichtung. Des Weiteren betrifft die vorliegende Erfindung ein Kraftfahrzeug mit einer solchen Detektionseinrichtung.

Im Automobilbereich werden zunehmend unterschiedliche Fahrerassistenzsysteme eingesetzt, das heißt elektronische Zusatzeinrichtungen zur Unterstützung des Fahrers in bestimmten Fahrsituationen. Zur Erkennung von Objekten in der Umgebung des Kraftfahrzeugs sowie zur Entfernungs- oder Geschwindigkeitsmessung sind optoelektronische Detektionseinrichtungen bekannt, welche nach dem Prinzip der Lichtlaufzeitzeitmessung (englisch: "time of flight", TOF) arbeiten.

Die Detektionseinrichtung umfasst hierzu mindestens eine optische Sendereinheit mit einem elektromagnetischen Pulserzeuger zum Aussenden elektromagnetischer Sendepulse in die Umgebung. Ein optischer Empfänger der Detektionseinrichtung weist mindestens einen Fotodetektor zum Empfangen von reflektierten Sendepulsen und zum Bereitstellen eines elektrischen Empfangssignals abhängig von den reflektierten Sendepulsen auf. Erkennt eine Auswertungseinrichtung anhand des optoelektronischen Empfängers Echos, beziehungsweise Pulse, in den empfangenen Sendepulsen, so sind diese grundsätzlich auf Reflexionen der ausgesendeten Sendepulse an Zielobjekten in der Umgebung zurückzuführen. Die Laufzeit zwischen dem Aussenden und dem Empfangen des Echos ist proportional zur Distanz zum Objekt. Aus der Laufzeitmessung wird beispielsweise die Entfernung zum betreffenden Objekt ermittelt.

Die von der Detektionseinrichtung ermittelten Informationen über Objekte im Umfeld des Fahrzeugs werden einem Steuergerät für das Fahrerassistenzsystem bereitgestellt. Unter der Bezeichnung "LIDAR" ("Light detection and ranging") wird eine Laufzeitmessung mit gepulsten Laser-Strahlen verstanden. Dabei werden die Sendepulse innerhalb eines Abtastwinkelbereichs in die Umgebung des Kraftfahrzeugs gesendet und so das Umfeld schrittweise gescannt.

Aus dem Stand der Technik sind abtastende optische Messvorrichtungen, so genannte Laserscanner, für Fahrzeuge zur Erkennung von Objekten bzw. Hindernissen in einem Überwachungsbereich bekannt, welche die Entfernung zu im Überwachungsbereich erkannten Objekten bzw. Hindernissen nach dem Lichtimpulslaufzeitverfahren bestimmen. EP 2955539 A1 offenbart eine derartige Vorrichtung.

Bei einem Laserscanner, der einen TOF-Empfänger verwendet, steuert der Empfänger auch die Pulserschaltung und damit die Laserdiode. Hierdurch ist es möglich, die Zeit bis zum Empfangen des zurückreflektierten Lichtes zu messen. Die Zeit, die das zurückreflektierte Licht benötigt hat, um wieder auf den Empfänger zu treffen, wird gemessen und in einen Distanzwert umgerechnet. Dieser Distanzwert wird anschließend einer Auswerteeinrichtung zur Verfügung gestellt. Eine Verzögerung z.B. durch die Pulserschaltung kann als systematischer Fehler korrigiert werden. Ändert sich diese Verzögerung z.B. über die Temperatur sind umfangreiche Kompensationstabellen erforderlich.

Nachteilig bei den aus dem Stand der Technik bekannten Detektionseinrichtungen ist, dass ein verändertes Verhalten der Detektionseinrichtung, auf Grund von Alterung der Pulserschaltung oder der Änderung der Temperatur, nicht festgestellt werden kann. Weiter nachteilig ist, dass der TOF-Empfänger kein Feedback darüber erhält, ob und wann das Laserlicht ausgesendet wurde. Eine Kompensation der temperatur- oder alterungsbedingten Fehler ist daher nicht möglich. Außerdem lassen sich Störungen der Detektionseinrichtung schlechter erkennen, was zu einer Verminderung der funktionalen Sicherheit führt.

Ausgehend von dem oben genannten Stand der Technik liegt der Erfindung somit die Aufgabe zugrunde, eine optoelektronische Detektionseinrichtung zu Verfügung zu stellen, die eine verbesserte Kompensation temperatur- oder alterungsbedingter Fehler der optoelektronische Detektionseinrichtung erlaubt. Eine weitere Aufgabe liegt darin, die funktionale Sicherheit der Detektionseinrichtung zu erhöhen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit eine optoelektronische Detektionseinrichtung angegeben mit mindestens einer optischen Sendeeinheit mit einem elektromagnetischen Pulserzeuger zum Aussenden elektromagnetischer Sendepulse, und mindestens einem optischen Empfänger zum Empfangen von reflektierten Sendepulsen, welcher einer Auswertungseinrichtung der optoelektronischen Detektionseinrichtung ein in Abhängigkeit der reflektierten Sendepulse gebildetes Empfangssignal bereitstellt, wobei der optische Empfänger eingerichtet ist, ein Triggersignal an die optische Sendeeinheit zur Steuerung der optischen Sendeeinheit bereitzustellen, wobei der optische Empfänger eingerichtet ist, das Triggersignal der Auswertungseinrichtung bereitzustellen, die optische Sendeeinheit eingerichtet ist, der Auswertungseinrichtung ein Feedbacksignal bereitzustellen, wobei das Feedbacksignal den Zeitpunkt der Aussendung des elektromagnetischen Sendepulses von dem elektromagnetischen Pulserzeuger angibt, und die Auswertungseinrichtung eingerichtet ist, die zeitliche Differenz zwischen dem Triggersignal und dem Feedbacksignal zu bestimmen.

Grundidee der vorliegenden Erfindung ist es also, die Differenz zwischen einem Triggersignal eines optischen Empfängers und einem Feedbacksignal eines optischen Senders zu ermitteln. Das Feedbacksignal ermöglicht es festzustellen, ob und wann ein Sendepuls von dem elektromagnetischen Pulserzeuger ausgesendet wurde. Bleibt z.B. nach dem Triggersignal das Feedbacksignal aus, wurde kein Sendeimpuls ausgesendet und es besteht eine Störung, die es im Zuge der funktionalen Sicherheit zu erkennen gilt. Aus der Differenz zwischen dem Triggersignal und dem Feedbacksignal lässt sich eine eventuell vorhandene Temperaturabhängigkeit oder Alterung der optischen Senderschaltung erkennen und kompensieren. Es können Verzögerungen beim Aussenden des Sendepulses in der Senderschaltung erfasst werden.

In einer vorteilhaften Ausgestaltung der Erfindung ist die optische Sendeeinheit ein Lasersender. Laser habe den Vorteil, dass sie ein schärferes Bild mit einer besseren Auflösung im Vergleich zu anderen Sendereinheiten liefern.

In einer weiter vorteilhaften Ausgestaltung der Erfindung ist der elektromagnetische Pulserzeuger eine Laserdiode. Der Vorteil von Laserdioden bzw. Halbleiterlasern besteht darin, dass sie mit sehr geringen Abmessungen in großen Mengen und daher günstig produziert werden können. Da Halbleiterlaser elektrische gepumpt werden, können sie sehr gut in elektrische Systeme integriert werden und besitzen zudem eine hohe Lebensdauer.

In einer weiter vorteilhaften Ausgestaltung der Erfindung ist die optische Sendeeinheit ausgeführt, eine Strommessung der Laserdiode durchzuführen, und das Feedbacksignal basierend auf einer Messung eines Stroms durch die Laserdiode bereitzustellen. Vorteilhaft bei der Bereitstellung des Feedbacksignals basierend auf einer Messung eines Stroms durch die Laserdiode ist, dass die Messung des Stroms verzögerungsfrei dem Aussenden des Lichtes entspricht und somit eine einfache Möglichkeit zur Bestimmung des genauen Zeitpunkts der Aussendung des elektromagnetischen Sendepulses von dem elektromagnetischen Pulserzeuger liefert.

In einer vorteilhaften Ausgestaltung der Erfindung ist die optoelektronische Detektionseinrichtung ausgeführt, eine Laufzeit des elektromagnetischen Sendepulses zwischen dem Sender und Empfänger basierend auf der zeitlichen Differenz zwischen dem Zeitpunkt der Aussendung des elektromagnetischen Sendepulses und dem Zeitpunkt des Empfangens des reflektierten Sendepulses zu bestimmen.

In einer vorteilhaften Ausgestaltung der Erfindung erfolgt die Bestimmung der zeitlichen Differenz zwischen dem Triggersignal und dem Feedbacksignal mittels zumindest eines Time-to-Digital Converters. Time-to-Digital Converter sind elektronische Baugruppen, die kurze Zeitintervalle messen und in eine digitale Ausgabe umwandeln können. Mittels Time-to-Digital Converter sind sehr genaue Zeitdifferenzmessungen möglich, die eine verbesserte Kompensation der Fehler, sowie eine genauere Entfernungsbestimmung ermöglichen.

In einer weiter vorteilhaften Ausgestaltung der Erfindung ist jeweils ein Time-to-Digital Converter für das Triggersignal und ein Time-to-Digital Converter für das Feedbacksignal vorgesehen. Die Bereitstellung von mehreren Time-to-Digital Convertern hat den Vorteil, dass die Messung der Zeitintervalle der Signale unabhängig voneinander geschehen kann.

In einer vorteilhaften Ausgestaltung der Erfindung ist die Auswertungseinrichtung ein Field Programmable Gate Array. Field Programmable Gate Arrays oder auch kurz FPGAs besitzen den Vorteil, dass sich mit ihnen logische Schaltungen einfach, schnell und flexibel implementieren lassen. Des Weiteren bieten FPGAs den Vorteil, dass sich einzelne Funktionen nachträglich integrieren lassen und daher eine einfache Anpassung an geänderte Vorgaben erfolgen kann.

In einer weiter vorteilhaften Ausgestaltung der Erfindung ist der zumindest eine Time-to-Digital Converter in dem Field Programmable Gate Array implementiert. Durch die Implementierung des Time-to-Digital Converters im FPGA werden keine externen Schaltungen mit weiteren Bauteilen benötigt und eine einfache Anpassung der Schaltung ermöglicht.

Die vorliegende Erfindung betrifft außerdem ein Verfahren zum Betrieb einer Detektionseinrichtung, wobei es die folgenden Schritte umfasst: Aussenden eines Startsignals von der Auswertungseinrichtung an den optischen Empfänger Aussenden eines Triggersignals von dem optischen Empfänger an die optische Sendeeinheit nach Erhalt des Startsignals Messung der Zeit von Startsignal bis zur Ankunft des Triggersignals in der Auswertungseinrichtung Aussendung des elektromagnetischen Sendepulses nach Erhalt des Triggersignals Aussendung eines Feedbacksignals welches den Zeitpunkt der Aussendung des elektromagnetischen Sendepulses angibt Messung der Zeit von Startsignal bis zur Ankunft des Feedbacksignals in der Auswertungseinrichtung Bestimmung der Differenz zwischen Triggersignal und Feedbacksignal Die vorliegende Erfindung betrifft weiterhin ein Kraftfahrzeug mit einer optoelektronischen Detektionseinrichtung gemäß einem der Ansprüche.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigt
- Fig. 1: eine schematische Ansicht eines Ausführungsbeispiels einer optoelektronischen Detektionseinrichtung
- Fig. 2: eine grafische Darstellung eines Ausführungsbeispiels für Startsignal, Triggersignal und Feedbacksignal einer optoelektronischen Detektionseinrichtung
- Fig. 3: ein Ablaufschema eines Ausführungsbeispiels eines Verfahrens zum Betreiben einer optoelektronischen Detektionseinrichtung

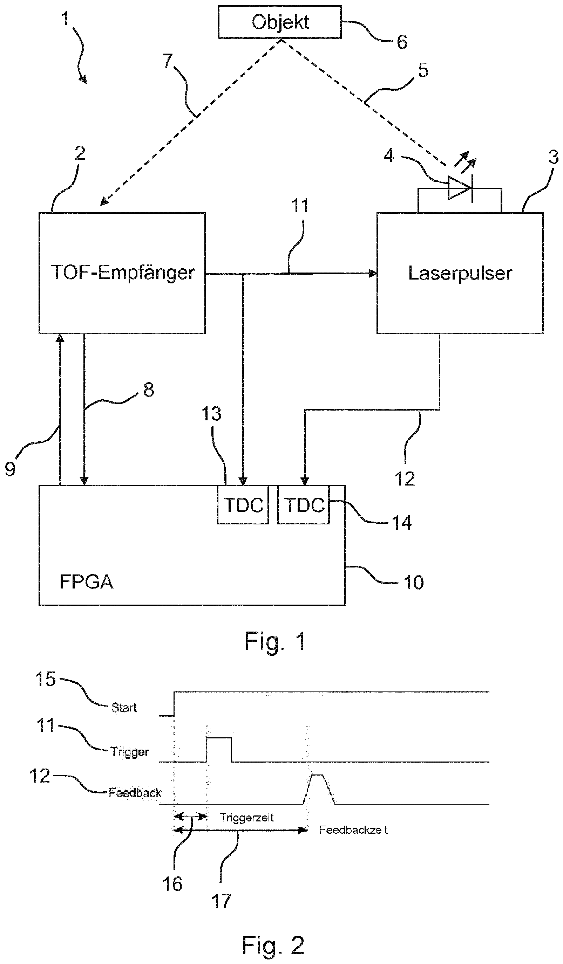

Die Figur 1 zeigt eine schematische Ansicht eines Ausführungsbeispiels einer optoelektrischen Detektionseinrichtung 1. Die Detektionseinrichtung 1 umfasst eine Time-of-Flight Empfänger (TOF-Empfänger) 2 und eine optische Sendeeinheit 3 mit einer Laserdiode 4.

Ein Laserimpuls 5 wird mittels der Laserdiode 4 ausgesendet, von einem Objekt 6 reflektiert und von dem TOF-Empfänger 2 registriert. Da der Laserimpuls 5 den Weg zweimal durchläuft entspricht eine Zeit von 6,67 ns genau 1 m. Daher ist es besonders wichtig, dass Sender 3 und Empfänger 2 im Voraus synchronisiert werden. Der TOF-Empfänger 2 steuert daher mittels eines Triggersignals 11 die optische Sendeeinheit 3 mit der elektromagnetischen Pulzerzeugung 4 und damit die Laserdiode 4. Hierdurch ist es möglich, die Zeit bis zum Empfangen des zurückreflektierten Lichtes 7 zu messen. Die Zeit, die das zurückreflektierte Licht 7 benötigt hat, um wieder auf den Empfänger 2 zu treffen, wird gemessen und in einen Distanzwert umgerechnet. Dieser Distanzwert wird anschließend der Auswerteeinrichtung zur Verfügung gestellt wird. Das Triggersignal 11 wird auch der Auswerteeinrichtung 10 zur Verfügung gestellt.

Der TOF-Empfänger 2 ist mit einer Leitung für ein Kontrollsignal 9 und einer Leitung für ein Datensignal 8 mit einer Auswerteeinrichtung 10 verbunden. In einer Ausführungsform der Erfindung ist die Auswerteeinrichtung 10 ein FPGA. In einer bevorzugten Ausführungsform wird das Triggersignal 11 auf einen im FPGA 10 implementierten Time-to-Digital Converter 13 geführt.

Die optische Sendeeinheit 3 stellt ein Feedbacksignal 12 zur Verfügung, welches den genauen Zeitpunkt der Aussendung des Laserimpulses 5 angibt. Die Messung der Aussendung des Laserimpulses 5 kann z.B. durch eine Strommessung der Laserdiode 4 erfolgen, da dies einer verzögerungsfreien Bestimmung der Aussendung des Laserimpulses 5 entspricht. Um Störungen auf dem Feedbacksignal 12 gering zu halten kann auch vorgesehen sein, dass die Feedbackleitung differentiell ausgelegt ist. Das Feedbacksignal 12 wird ebenfalls zu einem im FPGA 10 implementierten TDC 14 geführt. Das Feedbacksignal 12 wird dabei etwas später als das Triggersignal 11 im FPGA 10 eintreffen. Mittels der Differenz aus Zeitpunkt des Triggersignals 11 und des Feedbacksignals 12 können die zuvor ermittelten Distanzen gegebenenfalls korrigiert werden.

In einer Ausführungsform kann auch vorgesehen sein, dass die von der optischen Sendeeinheit 3 ausgesendeten Laserimpulse 5 über einen Spiegel abgelenkt werden. Dabei kann durch die Differenzmessung mittels des Feedbacksignals 12 eine Überprüfung der Verzögerung des TOF-Empfängers 2 durchgeführt werden. Im FPGA 10 wird dabei die Position des Ablenkspiegels bestimmt und der nächste Messzeitpunkt berechnet. Danach wird ein Startsignal 21 vom FPGA 10 an den Empfänger 2 gesendet und gleichzeitig die beiden TDCs 13,14für das Triggersignal 11 und das Feedbacksignal 12 gestartet.

Der Empfänger sendet das Triggersignal 11 an die optische Sendeeinheit 3 und die Zeit bis zum Triggersignal 11 wird über einen TDC 13 im FPGA 10 bestimmt. Dies erlaubt eine direkte Überprüfung, ob das Triggersignal 11 im erlaubten Zeitfenster eingetroffen ist.

Das von der optischen Sendeeinheit 3 ausgesendete Feedbacksignal 12 wird etwas später am zweiten TDC 14 am FPGA 10 eintreffen und gemessen. Das Feedbacksignal 12 wird auf Vorhandensein, Zeitpunkt und Dauer überprüft. Liegt der Zeitpunkt des Feedbacksignals12 nicht beim vorausberechneten Wert muss die Messung verworfen werden, da der Laserstrahl 5 über den Spiegel an eine falsche Position abgelenkt wurde. Am Ende der Messung überträgt der Empfänger 2 die gemessenen Entfernungswerte. Mittels der Differenz aus Zeitpunkt des Triggersignals 11 und des Feedbacksignals 12 können die zuvor ermittelten Distanzen gegebenenfalls korrigiert werden.

Die Figur 2 zeigt eine grafische Darstellung eines Ausführungsbeispiels für Startsignal 15, Triggersignal 11 und Feedbacksignal 12 einer optoelektronischen Detektionseinrichtung 1. Ein Startsignal 15 wird vom FPGA 10 an den Empfänger 2 ausgesendet und gleichzeitig die beiden TDCs 13, 14 für das Triggersignal 11 und das Feedbacksignal 12 gestartet. Der Empfänger 2 gibt das Triggersignal 11 an die optischen Sendeeinheit 3 weiter. Die Zeit vom Startsignal 15 bis zum Triggersignal 11 wird über einen TDC 13 im FPGA 10 bestimmt und gibt die Triggerzeit 16 an. Das Feedbacksignal 12 wird etwas später am zweiten TDC 14 am FPGA 10 eintreffen und gemessen. Die Zeit vom Startsignal 15 bis zum Feedbacksignal 12 ergibt die Feedbackzeit 17. Mittels der Messung der zeitlichen Differenz aus Triggerzeit 16 und Feedbackzeit 17 können temperatur- oder alterungsbedingte Fehler kompensiert werden und die Messung der Distanzen verbessert werden.

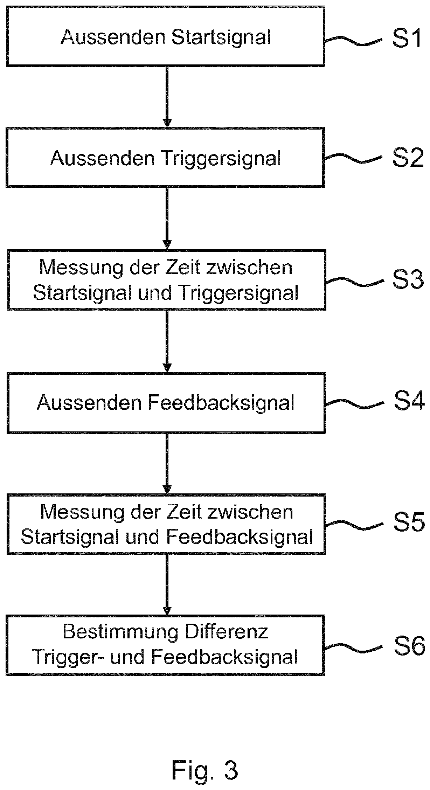

Die Figur 3 zeigt ein Ablaufschema eines Ausführungsbeispiels eines Verfahrens zum Betreiben einer optoelektronischen Detektionseinrichtung.

In Schritt S1 wird ein Startsignal vom FPGA 10 an den Empfänger 2 gesendet und gleichzeitig die beiden im FPGA implementierten TDCs 13, 14 für das Triggersignal 11 und das Feedbacksignal 12 gestartet.

In Schritt S2 sendet der Empfänger 2 das Triggersignal 11 an die optische Sendeeinheit 3 und an den FPGA 10.

In Schritt S3 wird die Zeit zwischen dem Startsignal 15 und dem Eintreffen des Triggersignals 11 am FPGA 10 über den TDC 13 bestimmt. Dies erlaubt eine direkte Überprüfung, ob das Signal im erlaubten Zeitfenster eingetroffen ist.

In Schritt S4 wird das Feedbacksignal 12 von der optische Sendeeinheit 3 ausgesendet, wobei das Feedbacksignal 12 auf einer Messung eines Stroms durch die Laserdiode 4 basiert. Die Messung des Stromes entspricht dabei dem verzögerungsfreien Aussenden des Laserimpulses 5.

In Schritt S5 wird die Zeit zwischen Startsignal 15 und des am zweiten TDC 14 im FPGA 10 eintreffende Feedbacksignals 12 gemessen.

In Schritt S6 wird die Differenz aus der Zeitmessung zwischen Startsignal 15 und Triggersignal 11 und der Zeitmessung zwischen Startsignal 15 und Feedbacksignal 12 ermittelt. Aus der Differenz der Zeitmessungen lassen sich temperaturabhängige oder alterungsabhängige Fehler ermitteln und kompensieren, wodurch die zuvor ermittelten Distanzen gegebenenfalls korrigiert werden können.

### Bezugszeichenliste

- 1: Detektionseinrichtung
- 2: optischer Empfänger
- 3: optische Sendeeinheit
- 4: elektromagnetischer Pulserzeuger
- 5: elektromagnetischer Sendepuls
- 6: Objekt
- 7: reflektierter Sendepuls
- 8: Datensignal
- 9: Kontrollsignal
- 10: Auswertungseinrichtung
- 11: Triggersignal
- 12: Feedbacksignal
- 13: Time-to-Digital Converter Triggersignal
- 14: Time-to-Digital Converter Feedbacksignal
- 15: Startsignal
- 16: Triggerzeit
- 17: Feedbackzeit

## Patentansprüche

1. Optoelektronische Detektionseinrichtung (1) mit
mindestens einer optischen Sendeeinheit (3) mit einem elektromagnetischen Pulserzeuger (4) zum Aussenden elektromagnetischer Sendepulse (5), und
mindestens einem optischen Empfänger (2) zum Empfangen von reflektierten Sendepulsen (7), welcher einer Auswertungseinrichtung (10) der optoelektronischen Detektionseinrichtung (1) ein in Abhängigkeit der reflektierten Sendepulse gebildetes Empfangssignal bereitstellt,
**dadurch gekennzeichnet, dass**
der optische Empfänger (2) eingerichtet ist, ein Triggersignal (11) an die optische Sendeeinheit (3) zur Steuerung der optischen Sendereinheit (3) bereitzustellen,
der optische Empfänger (2) eingerichtet ist, das Triggersignal (11) der Auswertungseinrichtung (10) bereitzustellen,
die optische Sendeeinheit (3) eingerichtet ist, der Auswertungseinrichtung (10) ein Feedbacksignal (12) bereitzustellen, wobei das Feedbacksignal (12) den Zeitpunkt der Aussendung des elektromagnetischen Sendepulses (5) von dem elektromagnetischen Pulserzeuger (4) angibt, und
die Auswertungseinrichtung (10) eingerichtet ist, die zeitliche Differenz zwischen dem Triggersignal (11) und dem Feedbacksignal (12) zu bestimmen.

2. Detektionseinrichtung (1) nach dem vorhergehenden Anspruch 1, **dadurch gekennzeichnet, dass** die optische Sendeeinheit (3) ein Lasersender ist.

3. Detektionseinrichtung (1) nach Anspruch 1, **dadurch gekennzeichnet, dass** der elektromagnetische Pulserzeuger (4) eine Laserdiode ist.

4. Detektionseinrichtung (1) nach Anspruch 3, **dadurch gekennzeichnet, dass** die optische Sendeeinheit (3) ausgeführt ist, eine Strommessung der Laserdiode (4) durchzuführen, und das Feedbacksignal (12) basierend auf einer Messung eines Stroms durch die Laserdiode (4) bereitzustellen.

5. Detektionseinrichtung (1) nach einem der vorherigen Ansprüche, **dadurch gekennzeichnet, dass** die optoelektronische Detektionseinrichtung (1) ausgeführt ist, eine Laufzeit des elektromagnetischen Sendepulses (5) zwischen dem Sender (3) und Empfänger (2) basierend auf der zeitlichen Differenz zwischen dem Zeitpunkt der Aussendung des elektromagnetischen Sendepulses (5) und dem Zeitpunkt des Empfangens des reflektierten Sendepulses (7) zu bestimmen.

6. Detektionseinrichtung (1) nach einem der vorherigen Ansprüche, **dadurch gekennzeichnet, dass** die Bestimmung der zeitlichen Differenz zwischen dem Triggersignal (11) und dem Feedbacksignal (12) mittels zumindest eines Time-to-Digital Converters (13, 14) erfolgt.

7. Detektionseinrichtung (1) nach Anspruch 6, **dadurch gekennzeichnet, dass** jeweils ein Time-to-Digital Converter (13) für das Triggersignal (11) und ein Time-to-Digital Converter (14) für das Feedbacksignal (12) vorgesehen ist.

8. Detektionseinrichtung (1) nach Anspruch 6 oder 7, **dadurch gekennzeichnet, dass** die Auswertungseinrichtung (10) ein Field Programmable Gate Array ist.

9. Detektionseinrichtung (1) nach Anspruch 8, **dadurch gekennzeichnet, dass** der zumindest eine Time-to-Digital Converter (13, 14) in dem Field Programmable Gate Array (10) implementiert ist.

10. Verfahren zum Betrieb einer Detektionseinrichtung (1) nach einem der vorhergehenden Ansprüche, wobei es die folgenden Schritte umfasst:
- Aussenden eines Startsignals (15) von der Auswertungseinrichtung (10) an den optischen Empfänger (2),
- Aussenden eines Triggersignals (11) von dem optischen Empfänger (2) an die optische Sendeeinheit (3) nach Erhalt des Startsignals (15),
- Messung der Zeit von Startsignal (15) bis zur Ankunft des Triggersignals (11) in der Auswertungseinrichtung (10),
- Aussendung des elektromagnetischen Sendepulses (5) nach Erhalt des Triggersignals (11),
- Aussendung eines Feedbacksignals (12) welches den Zeitpunkt der Aussendung des elektromagnetischen Sendepulses (5) angibt,
- Messung der Zeit von Startsignal (15) bis zur Ankunft des Feedbacksignals (12) in der Auswertungseinrichtung (10),
- Bestimmung der Differenz zwischen Triggersignal (11) und Feedbacksignal (12).

11. Kraftfahrzeug mit einer optoelektronischen Detektionseinrichtung (1) gemäß einem der Ansprüche 1 bis 9.

## Claims

1. Optoelectronic detection device (1) having
at least one optical transmitting unit (3) with an electromagnetic pulse generator (4) for emitting electromagnetic transmitted pulses (5), and
at least one optical receiver (2) for receiving reflected transmitted pulses (7) that provides a reception signal, formed depending on the reflected transmitted pulses, to an evaluation device (10) of the optoelectronic detection device (1),
**characterized in that**
the optical receiver (2) is configured to provide a trigger signal (11) to the optical transmitting unit (3) for control of the optical transmitting unit (3),
the optical receiver (2) is configured to provide the trigger signal (11) to the evaluation device (10),
the optical transmitting unit (3) is configured to provide a feedback signal (12) to the evaluation device (10), wherein the feedback signal (12) specifies the time of the emission of the electromagnetic transmitted pulse (5) by the electromagnetic pulse generator (4), and
the evaluation device (10) is configured to determine the time difference between the trigger signal (11) and the feedback signal (12).

2. Detection device (1) according to the preceding Claim 1, **characterized in that** the optical transmitting unit (3) is a laser transmitter.

3. Detection device (1) according to Claim 1, **characterized in that** the electromagnetic pulse generator (4) is a laser diode.

4. Detection device (1) according to Claim 3, **characterized in that** the optical transmitting unit (3) is designed to carry out a current measurement on the laser diode (4), and to provide the feedback signal (12) on the basis of a measurement of a current through the laser diode (4).

5. Detection device (1) according to any one of the preceding claims, **characterized in that** the optoelectronic detection device (1) is designed to determine a flight time of the electromagnetic transmitted pulse (5) between the transmitter (3) and the receiver (2) on the basis of the time difference between the time of the emission of the electromagnetic transmitted pulse (5) and the time of the reception of the reflected transmitted pulse (7).

6. Detection device (1) according to any one of the preceding claims, **characterized in that** the determination of the time difference between the trigger signal (11) and the feedback signal (12) is performed by means of at least one time-to-digital converter (13, 14).

7. Detection device (1) according to Claim 6, **characterized in that** one time-to-digital converter (13) is provided for the trigger signal (11) and one time-to-digital converter (14) is provided for the feedback signal (12).

8. Detection device (1) according to Claim 6 or 7, **characterized in that** the evaluation device (10) is a field-programmable gate array.

9. Detection device (1) according to Claim 8, **characterized in that** the at least one time-to-digital converter (13, 14) is implemented in the field-programmable gate array (10).

10. Method for the operation of a detection device (1) according to any one of the preceding claims, wherein the following steps are comprised:
- emitting a start signal (15) from the evaluation device (10) to the optical receiver (2),
- emitting a trigger signal (11) from the optical receiver (2) to the optical transmitting unit (3) after reception of the start signal (15),
- measuring the time from the start signal (15) to the arrival of the trigger signal (11) in the evaluation device (10),
- emitting the electromagnetic transmitted pulse (5) after reception of the trigger signal (11),
- emitting a feedback signal (12) that specifies the time of the emission of the electromagnetic transmitted pulse (5),
- measuring the time from the start signal (15) to the arrival of the feedback signal (12) in the evaluation device (10),
- determining the difference between the trigger signal (11) and the feedback signal (12).

11. Motor vehicle with an optoelectronic detection device (1) according to any one of Claims 1 to 9.

## Revendications

1. Dispositif de détection (1) optoélectronique, comprenant
au moins une unité d'émission optique (3) comprenant un générateur d'impulsions électromagnétiques (4) destiné à émettre des impulsions émises électromagnétiques (5), et au moins un récepteur optique (2) destiné à recevoir des impulsions émises (7) réfléchies, lequel fourni à un dispositif d'interprétation (10) du dispositif de détection (1) optoélectronique un signal de réception formé en fonction des impulsions émises réfléchies, **caractérisé en ce que**
le récepteur optique (2) est conçu pour fournir un signal de déclenchement (11) à l'unité d'émission optique (3) en vue de commander l'unité d'émission optique (3),
le récepteur optique (2) est conçu pour fournir le signal de déclenchement (11) au dispositif d'interprétation (10),
l'unité d'émission optique (3) est conçue pour fournir au dispositif d'interprétation (10) un signal de rétroaction (12), le signal de rétroaction (12) indiquant l'instant de l'émission des impulsions émises électromagnétiques (5) par le générateur d'impulsions électromagnétiques (4), et
le dispositif d'interprétation (10) étant conçu pour déterminer la différence de temps entre le signal de déclenchement (11) et le signal de rétroaction (12).

2. Dispositif de détection (1) selon la revendication 1 précédente, **caractérisé en ce que** l'unité d'émission optique (3) est un émetteur à laser.

3. Dispositif de détection (1) selon la revendication 1, **caractérisé en ce que** le générateur d'impulsions électromagnétiques (4) est une diode laser.

4. Dispositif de détection (1) selon la revendication 3, **caractérisé en ce que** l'unité d'émission optique (3) est réalisée pour effectuer une mesure de courant de la diode laser (4) et fournir le signal de rétroaction (12) sur la base d'une mesure d'un courant à travers la diode laser (4).

5. Dispositif de détection (1) selon l'une des revendications précédentes, **caractérisé en ce que** le dispositif de détection (1) optoélectronique est réalisé pour déterminer un temps de propagation de l'impulsion émise électromagnétique (5) entre l'émetteur (3) et le récepteur (2) en se basant sur la différence de temps entre l'instant de l'émission de l'impulsion émise électromagnétique (5) et l'instant de la réception de l'impulsion émise (7) réfléchie.

6. Dispositif de détection (1) selon l'une des revendications précédentes, **caractérisé en ce que** la détermination de la différence de temps entre le signal de déclenchement (11) et le signal de rétroaction (12) est effectuée au moyen d'au moins un convertisseur temps en signal (13, 14).

7. Dispositif de détection (1) selon la revendication 6, **caractérisé en ce qu'**un convertisseur temps en numérique (13) est respectivement présent pour le signal de déclenchement (11) et un convertisseur temps en numérique (14) pour le signal de rétroaction (12).

8. Dispositif de détection (1) selon la revendication 6 ou 7, **caractérisé en ce que** le dispositif d'interprétation (10) est un réseau prédiffusé programmable par l'utilisateur.

9. Dispositif de détection (1) selon la revendication 8, **caractérisé en ce que** l'au moins une convertisseur temps en numérique (13, 14) est mis en œuvre dans le réseau prédiffusé programmable par l'utilisateur (10).

10. Procédé pour faire fonctionner un dispositif de détection (1) selon l'une des revendications précédentes, celui-ci comprenant les étapes suivantes :
- émission d'un signal de départ (15) du dispositif d'interprétation (10) au récepteur optique (2),
- émission d'un signal de déclenchement (11) du récepteur optique (2) à l'unité d'émission optique (3) après la réception du signal de départ (15),
- mesure du temps du signal de départ (15) jusqu'à l'arrivée du signal de déclenchement (11) dans le dispositif d'interprétation (10),
- émission de l'impulsion émise électromagnétique (5) après la réception du signal de déclenchement (11),
- émission d'un signal de rétroaction (12), lequel indique l'instant de l'émission de l'impulsion émise électromagnétique (5),
- mesure du temps du signal de départ (15) jusqu'à l'arrivée du signal de rétroaction (12) dans le dispositif d'interprétation (10),
- détermination de la différence entre le signal de déclenchement (11) et le signal de rétroaction (12).

11. Véhicule automobile comprenant un dispositif de détection (1) selon l'une des revendications 1 à 9.
